# EUROPÄISCHE PATENTSCHRIFT

(11) **EP 1 353 841 B1**
(45) Veröffentlichungstag und Bekanntmachung des Hinweises auf die Patenterteilung: **01.06.2005**
(21) Anmeldenummer: 02701175.8
(22) Anmeldetag: 09.01.2002
(51) Int. Cl.: B63H 5/08, B63H 21/20, B63H 11/00

(54) **SCHNELLES MILITÄRISCHES ÜBERWASSERSCHIFF**
FAST MILITARY SURFACE CRAFT
BATIMENT DE SURFACE MILITAIRE RAPIDE

(30) Priorität: 22.01.2001 DE 10102741; 28.08.2001 DE 10141893
(43) Veröffentlichungstag der Anmeldung: 22.10.2003
(73) Patentinhaber: Siemens Aktiengesellschaft, 80333 München (DE)
(72) Erfinder: RZADKI, Wolfgang, 21509 Glinde (DE); DREFS, Armin, 25524 Itzehoe (DE); HARTIG, Rainer, 22089 Hamburg (DE); RICHTER, Stefan, 27749 Delmenhorst (DE); SADLER, Karl-Otto, 22159 Hamburg (DE)
(86) Internationale Anmeldenummer: PCT/DE2002/000039
(87) Internationale Veröffentlichungsnummer: WO 2002/057132

(56) Entgegenhaltungen:
- GB-A- 1 273 600
- US-A- 5 417 597
- GOOSSENS L: "A New Design Lay-Out with Alternative Propulsion on High Speed Displacement Ships" , INTERNATIONAL MARINE DESIGN CONFERENCE AND SUMMER MEETING OF THE GERMAN SOCIETY OF NAVAL ARCHITECTS, XX, XX, VOL. 1, NR. 1, PAGE(S) 111-124 XP002109514 Seite 117
- PATENT ABSTRACTS OF JAPAN vol. 1997, no. 10, 31. Oktober 1997 (1997-10-31) & JP 09 142384 A (KAWASAKI HEAVY IND LTD), 3. Juni 1997 (1997-06-03)
- HAMMERSCHMIDT UND SATTLER: "Die Brennatoffzelle und Wasserstofferzeugung mittels Reformer" JAHRBUCH DER SCHIFFBAUTECHNISCHEN GESELLSCHAFT., Bd. 92, 1998, Seiten 275-281, XP002201737 BERLIN, DE ISSN: 0374-1222

## Beschreibung

Die Erfindung betrifft ein schnelles militärisches Überwasserschiff, insbesondere Fregatte oder Korvette, mit zumindest zwei drehbaren elektrischen Ruderpropellerantrieben.

Aus der US 5,417,597 ist ein schnelles militärisches Überwasserschiff bekannt, dass zwei Ruderpropellerantriebe aufweist. Die Elektroenergie für die Antriebe werden durch Energieerzeugungsmodule im Schiff erzeugt, die je eine Gasturbine, einen Generator und einen Wechselrichter enthalten. Bei diesem bekannten Schiff ist es nachteilig, dass es nicht emissionsfrei fahren kann. Des weiteren ist nachteilig, dass die elektrischen Ruderpropellerantriebe für die Gefechtsgeschwindigkeit ausgelegt sein müssen, also bei Marschfahrt unwirtschaftlich arbeiten. Des weiteren ist nachteilig, dass durch einen Treffer, z.B. einen Torpedotreffer in das Heck, das Schiff manövrierunfähig wird und liegen bleibt. Auch die Höchstgeschwindigkeit ist begrenzt, da Ruderpropeller, die zur Erreichung einer sehr hohen Geschwindigkeit notwendig sind, so groß und so schwer ausfallen, dass sie im Heck eines schlanken militärischen Überwasserschiffes nicht untergebracht werden können.

Es ist Aufgabe der Erfindung, ein schnelles militärisches Überwasserschiff anzugeben, das die vorstehenden Nachteile nicht aufweist. Insbesondere soll seine Überlebensfähigkeit gegenüber dem bekannten Schiff deutlich gesteigert werden. Bis zum Erreichen der Marschgeschwindigkeit soll es emissionsfrei betrieben werden können.

Die Aufgabe wird dadurch gelöst, dass die elektrischen Ruderpropellerantriebe auf Marschgeschwindigkeit ausgelegt sind, wobei die Elektroenergie für die Ruderpropeller der elektrischen Ruderpropellerantriebe durch dezentral im Schiff verteilte Brennstoffzelleneinheiten erzeugt wird und wobei für höhere Geschwindigkeiten mindestens zwei, vorzugsweise elektrische, Wasserstrahlantriebe mit Wasserstrahlaustrittsdüsen unter Wasser vorgesehen sind, deren Elektroenergie vorzugsweise durch Generatoren erzeugt wird und wobei die Ruderpropeller unter dem Heck und die Wasserstrahlantriebe unter dem Schiffsbereich direkt hinter der Schiffsmitte angeordnet sind. Durch eine Integration von Wasserstrahlantrieben in das Schiff ergibt sich vorteilhaft die Möglichkeit, mit relativ klein ausgelegten elektrischen Ruderpropellerantrieben, die emissionsfrei betrieben werden könne, eine hohe Gefechtsgeschwindigkeit zu erreichen. Von weiterem Vorteil ist, dass die Wasserstrahlantriebe mit erheblicher Entfernung von den elektrischen Ruderpropellern angeordnet werden können, so dass ein einzelner, auch schwerer, Treffer nicht die gesamte Antriebsanlage des Schiffes außer Betrieb setzen kann. Von weiterem Vorteil ist dabei, dass mit Wasserstrahlantrieben hohe Geschwindigkeiten erreichbar sind, ohne dass das Gewicht und der Platzbedarf derartiger Antriebe zu hoch würde. Durch die Anordnung der Ruderpropeller unter dem Heck und der Wasserstrahlantriebe unter dem Schiffsbereich dicht hinter der Schiffsmitte wird erreicht, dass die Wasserstrahlantriebe bei Ausfall der elektrischen Ruderpropeller eine Steuerbarkeit des Schiffes ermöglichen. Dies insbesondere, wenn die Wasserstrahlrichtungen horizontal von der Schiffslängsachse abweichen. Insgesamt ergibt sich durch die erfindungsgemäße Lösung eine Kampfwertsteigerung bei gleichzeitig erhöhter Überlebensfähigkeit.

Eine weitere Erhöhung der Manövrierfähigkeit mit Hilfe der Wasserstrahlantriebe ergibt sich, wenn Strahlrichtungs-Einstellvorrichtungen vorgesehen sind. Dann ist sogar eine Feinsteuerung möglich und in Verbindung mit den gegenüber der Schiffslängsachse schräg austretenden Wasserstrahlen, die wie bei einem Zweischraubenschiff unterschiedlich stark schiebend eingestellt werden können, ergibt sich eine insgesamt noch ausreichende Manövrierfähigkeit auch bei Ausfall der elektrischen Ruderpropeller.

In weiterer Ausgestaltung der Erfindung ist vorgesehen, dass die Wasserstrahlantriebe jeweils zugeordnet Elektromotore aufweisen, die von Gasturbinen-Generatorsätzen mit elektrischer Energie versorgt werden. Hierdurch werden die Wasserstrahlantriebe unabhängig vom Bordnetz und können vorteilhaft auch bei vollständigem Ausfall des Bordnetzes weiterbetrieben werden. Zur weiteren Erhöhung der Betriebssicherheit ist dabei vorgesehen, dass das Schiff zwei Doppel-Wasserstrahl-Einheiten mit jeweils zwei Elektromotoren, zwei Kreiselpumpeneinheiten und zwei Austrittsdüsen aufweist. Hierdurch ergeben sich redundante Antriebseinheiten, die besonders standfest sind und auch bei Treffereinwirkung mit hoher Wahrscheinlichkeit eine Mindestfunktion aufrechterhalten.

In weiterer Ausgestaltung der Erfindung ist vorgesehen, dass die Gasturbinenabgasleitungen große Durchmesser und eine geringe Leitungskrümmung aufweisen, die in Abgas-Wasser-Mischkammern hinter den Wasserstrahlpumpen der Wasserstrahlantriebe einmünden. Durch diese Anordnung ergibt sich ein geringer Abgas-Austrittswiderstand aus den Gasturbinen, so dass sich gegenüber dem freien Austritt des Abgasstrahls der vorteilhaft verwendeten Standard-Flugzeuggasturbinen, z.B. GE-Gasturbinen, nur ein geringer Wirkungsgradabfall ergibt.

Es ist dabei vorgesehen, dass die Mischkammern derart ausgebildet sind, dass in ihnen ein Unterdruck herrscht. Hierdurch erfolgt sehr vorteilhaft eine Einleitung der Abgase in den Wasseraustrittsstrahl, wo sich die Temperatur der Abgase schnell an die Wassertemperatur angleicht. So wird die Detektion durch IR-Detektoren in Satelliten oder in Flugkörpern auch bei Einsatz der Wasserstrahlantriebe vermieden. Die Mischkammern sind vorteilhaft derart ausgebildet, dass Abgasblasen entstehen, die mit dem Wasserstrahl ausgetragen werden. Durch die Bildung von Abgasblasen ergibt sich eine besonders feine Verteilung der Abgase im Wasser. So erfolgt die Abkühlung der heißen Gasturbinenabgase besonders schnell und gleichmäßig. Wärmefahnen im Wasser, die das Schiff einem anfliegenden Flugkörper oder einem Satelliten verraten würden, entstehen nicht.

In weiterer Ausgestaltung der Erfindung ist vorgesehen, dass die Richtung der Wasserstrahlen vertikal von der Schiffslängsrichtung abweicht und insbesondere geneigt unter den Ruderpropellern verläuft. Hierdurch werden sehr vorteilhaft die Ruderpropeller aus den mit relativ hoher Geschwindigkeit nach achtern strömenden Wasserstrahlen der Wasserstrahlantriebe herausgehalten. So ist ein guter Wirkungsgrad der Ruderpropellerantriebe auch bei Betrieb der Wasserstrahlantriebe und eine gute Steuerbarkeit möglich. Auch Kavitationsprobleme werden vermieden und die Drehzahl der Ruderpropeller kann niedriger gehalten werden.

Die Wasserstrahlantriebe sind vorteilhaft in vom Schiffsboden abstehenden Gehäusen angeordnet. So kann ein einfacher Wassereinlauf für die Wasserstrahlpumpen erreicht werden und die Wasserstrahlantriebe können austrittsseitig leicht strömungsgünstig optimiert werden. Darüber hinaus ist im Dock eine einfachere Montage, Demontage und Wartung der Wasserstrahleinrichtungen möglich.

In weiterer Ausgestaltung der Erfindung ist vorgesehen, dass der Drehkreis der Ruderpropeller innerhalb des Rumpfquerschnitts liegt, wobei die Gehäuse der Wasserstrahlantriebe den größten Rumpfquerschnitt bestimmen. So sind die Propeller der Ruderpropeller durch den Rumpfquerschnitt gegen eine Verformung bei einem möglichen Auflaufen des Schiffes geschützt. Gleichzeitig sind sie so tief angeordnet, wie konstruktiv möglich, ohne die Schutzfunktion des größten Rumpfquerschnitts zu verlieren.

Es ist weiterhin im Rahmen der Erfindung vorgesehen, dass die Ruderpropeller den engstmöglichen Abstand zueinander aufweisen, z.B. einen Abstand entsprechend dem 1,2fach des Propellerdurchmessers und dass vorzugsweise vor oder hinter dem Ruderpropellern ein Hilfsruderblatt angeordnet ist, das insbesondere bei Geradeausfahrt eingesetzt werden soll. So ergibt sich sehr vorteilhaft eine Geradeausfahrtruderanordnung, die einen guten Geradeauslauf des Schiffes ermöglicht, wobei die Ruderpropeller bei Geradeausfahrt festgestellt bleiben können. So ergibt sich eine besonders geräuscharme Möglichkeit des Ruderlegens und der Energieverbrauch wird verringert. Gleichzeitig erlaubt der geringe Abstand der elektrischen Ruderpropeller voneinander, dass die gesamte Heckkonstruktion leicht ausgeführt werden kann.

In weiterer Ausgestaltung der Erfindung ist vorgesehen, dass die elektrischen Ruderpropeller je einen Zugpropeller aufweisen. Hierdurch ergibt sich ein vorteilhafter hoher Wirkungsgrad der Propeller. Die elektrischen Ruderpropeller können auch gleichläufige Propeller an jedem Ende des Elektromotors aufweisen, dann ergibt sich der Vorteil, dass kleinere Propeller eingesetzt werden können. Dies ist von Vorteil, wenn der Tiefgang des Schiffes gering gehalten werden soll, wobei vorgesehen ist, dass der Tiefgang des Schiffes nicht über 8 m liegt. So können speziell in Europa viele Häfen angelaufen und auch Küstengewässer befahren werden, die Schiffen mit größerem Tiefgang nicht zugänglich sind.

Zur Erhöhung der Überlebensfähigkeit des Schiffes ist vorgesehen, dass alle Antriebsmotoren und Energieerzeugungseinheiten zumindest doppelt vorhanden sind und dass die rotierenden Energieerzeugungseinheiten und die Elektromotore der Ruderpropeller und der Wasserstrahlpumpen schockgedämpft gelagert sind.

Zur Erhöhung der Überlebungsfähigkeit ist auch vorgesehen, dass das Schiff ein Gleichstromnetzwerk mit Strombegrenzern aufweist, die aufgrund physikalischer Vorgänge Lichtbögen im Entstehen erlöschen lassen, insbesondere Hochtemperatursupraleitungs-Strombegrenzer. So wird vorteilhaft die Ausbildung von Lichtbögen mit ihren sehr negativen Folgen verhindert. Das Entstehen eines Lichtbogens hat in der Regel den elektrischen Ausfall ganzer Schiffsbereiche als Folge. In der Regel muss zum Löschen größerer Lichtbögen die Hauptschaltanlage betätigt werden, dann ist das ganze Schiff vorübergehend ohne elektrische Energie. Durch den Einsatz von Hochtemperatursupraleitungs-Strombegrenzern lässt sich das Entstehen von Lichtbögen sicher verhindern. Es wird vermieden, dass die Hauptschaltanlage zum Abschalten von Lichtbögen betätigt werden muss. Damit ist ein wesentlicher Ausfallgrund für die elektrische Anlage von militärischen Schiffen beseitigt und bei dem erfindungsgemäßen Schiff insbesondere sichergestellt, dass die über das Bordnetz gespeisten elektrischen Ruderpropeller auch nach einem Treffer in einen anderen Schiffsbereich in Betrieb bleiben können. Hierzu weisen die Ruderpropeller vorteilhaft einen Notfahrstand, z.B. im Heck, auf.

Zur Erhöhung des Wirkungsgrads der Ruderpropeller bei Einsatz der Wasserstrahlantriebe ist vorgesehen, dass die Ruderpropeller Verstellpropeller aufweisen, deren Drehzahl und Steigung der Schiffsgeschwindigkeit anpassbar ist. Weiterhin ist vorgesehen, dass das Schiff in den letzten 25 % bis 30 % der Schiffslänge einen hochgezogen, ggf. flachen, Unterwasserschiffsverlauf aufweist. So ergibt sich ein besonders gutes Abströmverhalten im Heckbereich, was die Schiffsgeschwindigkeit ohne Erhöhung der Antriebsleistung nicht unerheblich steigert. Die Verwendung von Verstellpropellern und die spezielle Ausbildung des Schiffshecks ergeben eine Geschwindigkeitssteigerung, die den Einsatz eines von Brennstoffzellen gespeisten Ruderpropellerantriebssystems mit seiner gegenüber Gasturbinen-Generatorsätzen geringeren Energieerzeugung besonders vorteilhaft macht. Zur Erhöhung der Kursstabilität trotz des hochgezogenen Heckteils ist vorgesehen, dass das Schiff vor den Ruderpropellern einen Mittelskeg aufweist, der zirka eine Ruderpropellerlänge vor den Ruderpropellern endet. Dies ist eine Maßnahme, die in Zusammenhang mit dem Hilfsruder eine dauernde Bewegung der elektrischen Ruderpropeller zum Kurshalten vermeidet. Entsprechend sinkt der Antriebsbedarf der Drehmotore für die elektrischen Ruderpropeller und es entstehen auch eine verräterischen Geräusche bei der Betätigung der Ruderpropeller.

In weiterer Ausgestaltung der Erfindung ist vorgesehen, dass bei Betrieb der Wasserstrahlantriebseinheiten ein leistungsloses Mitdrehen der elektrischen Ruderpropeller vorgesehen ist. So wird vorteilhaft eine Bremsung durch die Propeller der Ruderpropeller bei einem Betrieb des Schiffes nur mit den Wasserstrahlantrieben vermieden. Falls die Geschwindigkeit über die Geschwindigkeit, die mit den Wasserstrahlantrieben erreicht werden kann, gesteigert werden soll, wird dann entsprechend der Leistungsanforderung der Ruderpropellerantrieb zugeschaltet, wobei vorteilhaft Drehzahl und Steigung der Propeller der elektrischen Ruderpropeller dem Betriebszustand angepasst wird. Bei gleichzeitigem Volllasteinsatz von Wasserstrahlantrieben und Ruderpropellern ergibt sich dann die Höchstgeschwindigkeit.

Es ist dabei vorgesehen, dass die elektrischen Ruderpropeller, die vorzugsweise als Drehstromantrieb ausgebildet sind, bei Überschreiten der Drehzahl n₁ im Feldschwächbereich betrieben werden. So ist sichergestellt, dass die maximal mögliche Leistung von den Ruderpropellern auch bei hohen Geschwindigkeiten abgegeben wird.

Die Erfindung wird anhand von Zeichnungen näher erläutert, aus denen weitere, auch erfindungswesentliche, Einzelheiten entnehmbar sind.

Im einzelnen zeigen in Prinzipdarstellungen:
- FIG 1: ein erfindungsgemäßes schnelles militärischen Überwasserschiff, teilweise im Schnitt und
- FIG 2: eine Heckansicht des erfindungsgemäßen Schiffs.

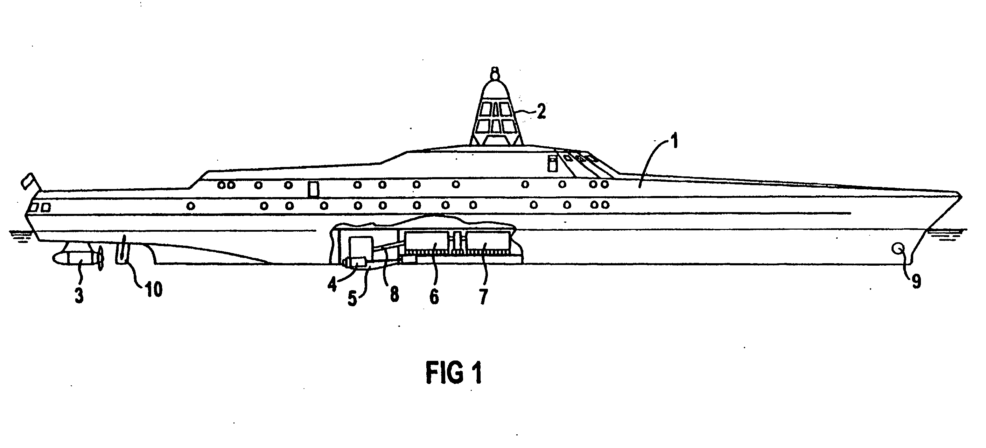

In FIG 1 bezeichnet 1 den Schiffskörper und 2 einen, ggf. einfahrbaren, Radarturm. In diesem Turm werden auch weitere, für die Sicherheit und Leitung des Schiffes notwendige Sensoren etc. angebracht. Unter dem Heck des Schiffes ist die Ruderpropellereinrichtung 3 angeordnet, vor der sich ein, vorzugsweise ausfahrbares, Hilfsruder befindet. Dieses Hilfsruder wird insbesondere zur Steuerung bei Marschfahrt eingesetzt. Im Gefechtsfall wird es ggf. eingezogen und ist so besonders geschützt.

Im mittlere Teil des Schiffes befinden sich in einem gesonderten Gehäuse 5 die Wasserstrahlaustrittsdüsen 4 mit der darüber angeordneten Gaszumischanordnung sowie eine Gasturbine 6 und ein Generator 7. Zwischen der Gasturbine 6 und der Wasserstrahleinrichtung 4 befindet sich die Abgasleitung 8, die so wenig gekrümmt wie möglich ausgeführt ist.

Im Bug des Schiffes befindet sich noch ein Querstrahlruder 9, dieses kann auch durch einen einziehbaren kleinen elektrischen Ruderpropeller ersetzt werden, dann ergibt sich eine erhöhte Manövrierbarkeit des Schiffes, z.B. im Hafenbereich - hier kann durch das Zusammenwirken von den im Heck angeordneten Ruderpropellereinheiten 3 und dem Querstrahlruder- bzw. dem kleinen Ruderpropeller im Bug - auf eine Schlepperhilfe vollständig verzichtet werden. Der kleine Ruderpropeller im Bugbereich kann dabei auch als autark funktionierender "take home"-Antrieb ausgebildet sein.

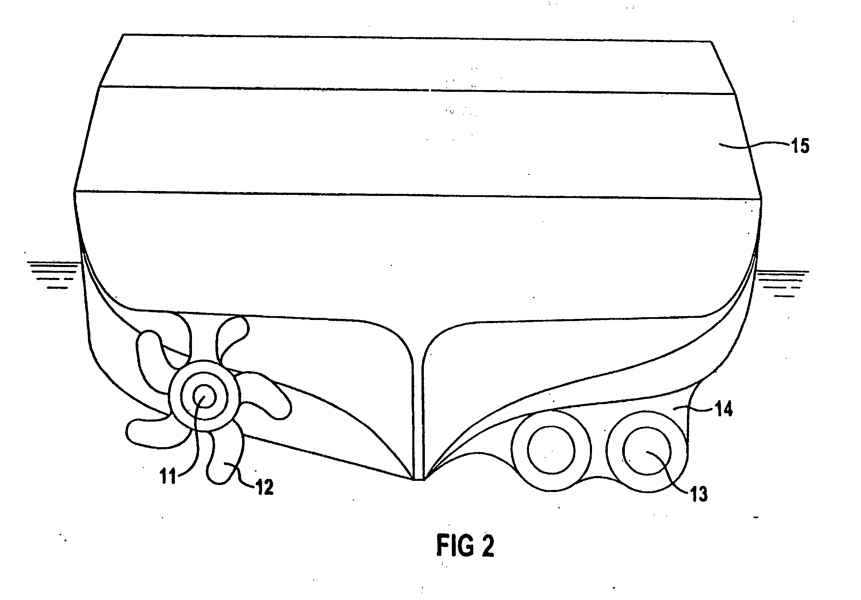

In FIG 2 bezeichnet 11 die elektrischen Ruderpropeller und 12 die Propeller der elektrischen Ruderpropeller. Sowohl die elektrischen Ruderpropellergehäuse als auch die Propeller der elektrischen Ruderpropeller sind vorteilhaft aus Bronze und so ausgebildet, dass die Propeller 12 nicht tiefer als das Gehäuse 14 der Wasserstrahlantriebe 13 reichen. Auf jeder Seite des Rumpfes 15 ist zur Vereinfachung nur je ein elektrischer Ruderpropeller und ein Wasserstrahlantrieb abgebildet.

Die Wasserstrahlantriebe 13 können ebenso wie die elektrischen Ruderpropeller 11 Aggregaten entsprechen, die aus der zivilen Schifffahrt bekannt sind. Elektrische Ruderpropeller baut beispielsweise das Siemens-Schottel-Konsortium (Handelsname für den Antrieb SSP) und entsprechende Wasserstrahlantriebe die Firma Royce Rolls Navalmarine Inc., wobei hier besonders der Typ BJCO-120 vorteilhaft verwendet werden kann. In Bezug auf die Geräuschentwicklung, die magnetische und elektrische Signatur und die Schockdämpfung werden die zivilen Antriebe den Anforderungen an militärische Schiffe angepasst.

## Patentansprüche

1. Schnelles militärisches Überwasserschiff, insbesondere Fregatte oder Korvette, mit zumindest zwei drehbaren elektrischen Ruderpropeller-Antrieben (3), **dadurch gekennzeichnet, dass** die elektrischen Ruderpropellerantriebe (3) auf Marschgeschwindigkeit ausgelegt sind, wobei die Elektroenergie für die Ruderpropeller (11) der elektrischen Ruderpropellerantriebe (3) durch dezentral im Schiff verteilte Brennstoffzellen-Einheiten erzeugt wird und wobei für höhere Geschwindigkeiten mindestens zwei, vorzugsweise elektrische, Wasserstrahl-Antriebe (13) mit Wasserstrahl-Austrittsdüsen (4) unter Wasser vorgesehen sind, deren Elektroenergie vorzugsweise durch Generatoren (7) erzeugt wird und wobei die Ruderpropeller (11) unter dem Heck und die Wasserstrahlantriebe (13) unter dem Schiffsbereich dicht hinter der Schiffsmitte angeordnet sind.

2. Schnelles militärisches Überwasserschiff nach Anspruch 1, **dadurch gekennzeichnet, dass** die Wasserstrahlantriebe (13) Strahlrichtungs-Einstellvorrichtungen aufweisen.

3. Schnelles militärisches Überwasserschiff nach Anspruch 1 oder 2, **dadurch gekennzeichnet, dass** die Wasserstrahlantriebe (13) jeweils zugeordnete Elektromotoren aufweisen, die von Gasturbinen-Generatorsätzen mit elektrischer Energie versorgt werden.

4. Schnelles militärisches Überwasserschiff nach Anspruch 1, 2 oder 3,**dadurch gekennzeichnet, dass** es zwei Doppel-Wasserstrahleinheiten mit jeweils zwei Elektromotoren, zwei Kreiselpumpeneinheiten und zwei Austrittsdüsen aufweist.

5. Schnelles militärisches Überwasserschiff nach Anspruch 3 oder 4, **dadurch gekennzeichnet, dass** die Gasturbinen (6) Abgasleitungen (8) großen Durchmessers mit geringer Krümmung aufweisen, die in Abgas-Wasser-Mischkammern hinter den Wasserstrahlpumpen der Wasserstrahlantriebe (13) einmünden.

6. Schnelles militärisches Überwasserschiff nach Anspruch 5, **dadurch gekennzeichnet, dass** die Mischkammern derart ausgebildet sind, dass in ihnen ein Unterdruck herrscht.

7. Schnelles militärisches Überwasserschiff nach Anspruch 5 oder 6, **dadurch gekennzeichnet, dass** die Mischkammern derart ausgebildet sind, dass Abgasblasen entstehen, die mit dem Wasserstrahl ausgetragen werden.

8. Schnelles militärisches Überwasserschiff nach Anspruch 5, 6 oder 7, **dadurch gekennzeichnet, dass** die Richtung der Wasserstrahlen vertikal von der Schiffslängsrichtung abweicht und insbesondere geneigt unter den Ruderpropellern (11) verläuft.

9. Schnelles militärisches Überwasserschiff nach Anspruch 5, 6, 7 oder 8, **dadurch gekennzeichnet, dass** die Wasserstrahlantriebe (13) in vom Schiffsboden abstehenden Gehäusen (5) angeordnet sind.

10. Schnelles militärisches Überwasserschiff nach einem der vorhergehenden Ansprüche, **dadurch gekennzeichnet, dass** der Drehkreis der Ruderpropeller (11) innerhalb des Rumpfquerschnitts liegt, wobei die Gehäuse (5) der Wasserstrahlantriebe (13) den größten Rumpfquerschnitt bestimmen.

11. Schnelles militärisches Überwasserschiff nach einem der vorhergehenden Ansprüche, **dadurch gekennzeichnet, dass** die Ruderpropeller (11) den engstmöglichen Abstand zueinander aufweisen, z.B. einen Abstand entsprechend dem 1,2fachen des Propellerdurchmessers und das vorzugsweise vor oder hinter den Ruderpropellern (11) ein Hilfsruderblatt angeordnet ist, das insbesondere bei Geradeausfahrt eingesetzt werden soll.

12. Schnelles militärisches Überwasserschiff nach einem der vorhergehenden Ansprüche, **dadurch gekennzeichnet, dass** die elektrischen Ruderpropeller (11) je einen Zugpropeller aufweisen.

13. Schnelles militärisches Überwasserschiff nach einem der Ansprüche 1 bis 11, **dadurch gekennzeichnet, dass** die elektrischen Ruderpropeller (11) gleichläufige Propeller (12) an jedem Ende des Elektromotors aufweisen.

14. Schnelles militärisches Überwasserschiff nach einem der vorhergehenden Ansprüche, **dadurch gekennzeichnet, dass** der Tiefgang des Schiffes 8 m nicht übersteigt.

15. Schnelles militärisches Überwasserschiff nach Anspruch 3, **dadurch gekennzeichnet, dass** die Gasturbinen-Generatoreinheiten für die Wasserstrahlantriebe (13) etwa in der Schiffsmitte oder unmittelbar dahinter angeordnet sind.

16. Schnelles militärisches Überwasserschiff nach einem der vorhergehenden Ansprüche, **dadurch gekennzeichnet, dass** die rotierenden Energieerzeugungseinheiten und die Elektromotoren der Ruderpropeller (11) und der Wasserstrahlpumpen schockgedämpft gelagert sind.

17. Schnelles militärisches Überwasserschiff nach einem der vorhergehenden Ansprüche, **dadurch gekennzeichnet, dass** alle Antriebsmotoren und Energieerzeugungseinheiten zumindest doppelt vorhanden sind.

18. Schnelles militärisches Überwasserschiff nach einem der vorhergehenden Ansprüche, **dadurch gekennzeichnet, dass** es ein Gleichstromnetzwerk mit Strombegrenzern aufweist, die aufgrund physikalischer Vorgänge Lichtbögen im Entstehen erlöschen lassen, insbesondere Hochtemperatursupraleitungs-Strombegrenzer.

19. Schnelles militärisches Überwasserschiff nach einem der vorangehenden Ansprüche, **dadurch gekennzeichnet, dass** die Ruderpropeller (11) Verstellpropeller aufweisen, deren Drehzahl und Steigung der Schiffsgeschwindigkeit anpassbar ist.

20. Schnelles militärisches Überwasserschiff nach einem der vorangehenden Ansprüche, **dadurch gekennzeichnet, dass** es in den letzten 25 % bis 30 % der Schiffslänge einen hochgezogenen Unterwasserschiffsverlauf aufweist.

21. Schnelles militärisches Überwasserschiff nach einem der vorangehenden Ansprüche, **dadurch gekennzeichnet, dass** es vor den Ruderpropellern (11) einen Mittelskeg aufweist, der zirka eine Ruderpropellerlänge vor den Ruderpropellern (11) endet.

22. Schnelles militärisches Überwasserschiff nach einem der vorhergehenden Ansprüche, **dadurch gekennzeichnet, dass** bei Betrieb der Wasserstrahlantriebseinheiten (13) ein leistungsloses Mitdrehen der elektrischen Ruderpropeller (11) vorgesehen ist.

23. Schnelles militärisches Überwasserschiff nach Ansprüchen 1 bis 21, **dadurch gekennzeichnet, dass** bei Höchstfahrtanforderung sowohl die elektrischen Ruderpropeller (11) als auch die Wasserstrahlantriebe (13) mit Höchstleistung laufen, wobei Drehzahl und Steigung der Propeller (12) der elektrischen Ruderpropeller (11) diesem Betriebzustand angepasst sind.

24. Schnelles militärisches Überwasserschiff nach einem der vorhergehenden Ansprüche, **dadurch gekennzeichnet, dass** die elektrischen Ruderpropeller (11), die vorzugsweise als Drehstromantriebe ausgebildet sind, bei Überschreiten der Drehzahl n₁ im Feldschwächbereich betrieben werden.

## Claims

1. High-speed naval surface vessel, in particular a frigate or corvette, having at least two electrical steering propeller propulsion systems (3) which can swivel, **characterized in that** the electrical steering propeller propulsion systems (3) are designed for cruise speed, with the electrical power for the steering propellers (11) for the electrical steering propeller propulsion systems (3) being produced by fuel cell units which are distributed in a decentralized manner in the vessel, and with at least two, preferably electrical, water jet propulsion systems (13) with water jet outlet nozzles (4) under the water being provided for higher speeds, whose electrical power is preferably produced by generators (7) and in which the steering propellers (11) are arranged under the stern and the water jet propulsion systems (13) are arranged under the area of the vessel closely behind the centre of the vessel.

2. High-speed naval surface vessel according to Claim 1, **characterized in that** the water jet propulsion systems (13) have jet direction adjusting apparatuses.

3. High-speed naval surface vessel according to Claim 1 or 2, **characterized in that** the water jet propulsion systems (13) each have associated electric motors, which are supplied with electrical power from gas turbine generator sets.

4. High-speed naval surface vessel according to Claim 1, 2, or 3, **characterized in that** the vessel has two double water jet units, each having two electric motors, two turbine pump units and two outlet nozzles.

5. High-speed naval surface vessel according to Claim 3 or 4, **characterized in that** the gas turbines (6) have large diameter exhaust gas pipes (8) with little curvature, which open into exhaust gas/water mixing chambers behind the water jet pumps for the water jet propulsion systems (13).

6. High-speed naval surface vessel according to Claim 5, **characterized in that** the mixing chambers are designed such that there is a reduced pressure in them.

7. High-speed naval surface vessel according to Claim 5 or 6, **characterized in that** the mixing chambers are designed such that exhaust gas bubbles are produced, which are carried away with the water jet.

8. High-speed naval surface vessel according to Claim 5, 6 or 7, **characterized in that** the direction of the water jets differs vertically from the longitudinal direction of the vessel and, in particular, runs at an angle under the steering propellers (11).

9. High-speed naval surface vessel according to Claim 5, 6, 7 or 8, **characterized in that** the water jet propulsion systems (13) are arranged in housings (5) which project from the bottom of the vessel.

10. High-speed naval surface vessel according to one of the preceding claims, **characterized in that** the circle of rotation of the steering propellers (11) is within the hull cross section, with the housings (5) of the water jet propulsion systems (13) determining the largest hull cross section.

11. High-speed naval surface vessel according to one of the preceding claims, **characterized in that** the steering propellers (11) are as close to one another as possible, for example with the distance between them corresponding to 1.2 times the propeller diameter, and **in that** an auxilary rudder blade is preferably arranged in front of or behind the steering propellers (11), and is intended to be used in particular when moving straight ahead.

12. High-speed naval surface vessel according to one of the preceding claims, **characterized in that** the electrical steering propellers (11) each have a traction propeller.

13. High-speed naval surface vessel according to one of Claims 1 to 11, **characterized in that** the electrical steering propellers (11) have propellers (12) which rotate in the same direction at each end of the electric motor.

14. High-speed naval surface vessel according to one of the preceding claims, **characterized in that** the draft of the vessel is not more than 8 m.

15. High-speed naval surface vessel according to Claim 3, **characterized in that** the gas turbine generator units for the water jet propulsion systems (13) are arranged approximately at the center of the vessel, or immediately behind it.

16. High-speed naval surface vessel according to one of the preceding claims, **characterized in that** the rotating power production units and the electric motors for the steering propellers (11) and for the water jet pumps are mounted on shock absorbers.

17. High-speed naval surface vessel according to one of the preceding claims, **characterized in that** all the propulsion motors and power production units are at least duplicated.

18. High-speed naval surface vessel according to one of the preceding claims, **characterized in that** the vessel has a direct-current network with current limiters which can use physical processes to extinguish arcs as they occur, in particular, high-temperature superconducting current limiters.

19. High-speed naval surface vessel according to one of the preceding claims, **characterized in that** the steering propellers (11) have variable-pitch propellers, whose rotation speed and pitch can be matched to the speed of the vessel.

20. High-speed naval surface vessel according to one of the preceding claims, **characterized in that** the vessel has a raised underwater vessel profile in the last 25% to 30% of the length of the vessel.

21. High-speed naval surface vessel according to one of the preceding claims, **characterized in that** the vessel has a center skeg in front of the steering propellers (11), which ends approximately one steering propeller length in front of the steering propellers (11).

22. High-speed naval surface vessel according to one of the preceding claims, **characterized in that** the electrical steering propellers (11) windmill during operation of the water jet propulsion units (13).

23. High-speed naval surface vessel according to Claims 1 to 21, **characterized in that**, when the maximum speed is demanded, both the electrical steering propellers (11) and the water jet propulsion systems (13) run at maximum power, with the rotation speed and pitch of the propellers (12) of the electrical steering propellers (11) being matched to this operating mode.

24. High-speed naval surface vessel according to one of the preceding claims, **characterized in that** the electrical steering propellers (11), which are preferably in the form of three-phase propulsion systems, are operated in the speed variation by field control range when the rotation

## Revendications

1. Bâtiment de navigation de surface militaire rapide, en particulier frégate ou corvette, comportant au moins deux entraînements d'hélices de gouvernail électriques rotatifs (3), **caractérisé en ce que** les entraînements d'hélices de gouvernail électriques (3) sont prévus pour une vitesse de marche pour laquelle l'énergie électrique destinée aux hélices de gouvernail (11) des entraînements d'hélices de gouvernail électriques (3) est générée par des unités de cellule de carburant réparties de façon décentralisée dans le navire, et pour des vitesses plus élevées au moins deux entraînements à jets d'eau (13), de préférence électriques, comportant des buses de sortie de jets d'eau (4) étant prévus sous l'eau, pour lesquels l'énergie électrique est générée de préférence par des générateurs (7) et les hélices de gouvernail (11) étant disposés sous la poupe et les entraînements à jets d'eau (13) étant disposés de manière étanche sous la région du navire en arrière du milieu du navire.

2. Bâtiment de surface militaire rapide selon la revendication 1,
**caractérisé en ce que** les entraînements à jets d'eau (13) comportent des dispositifs de réglage de la direction des jets.

3. Bâtiment de surface militaire rapide selon la revendication 1 ou 2,
**caractérisé en ce que** les entraînements à jets d'eau (13) comportent chacun des moteurs électriques associés qui sont alimentés en énergie électrique par des ensembles générateurs à turbine à gaz.

4. Bâtiment de surface militaire rapide selon la revendication 1, 2 ou 3,
**caractérisé en ce qu'**il comporte deux unités de jet d'eau doubles comportant chacune deux moteurs électriques, deux unités de pompe centrifuge et deux buses de sortie.

5. Bâtiment de surface militaire rapide selon la revendication 3 ou 4,
**caractérisé en ce que** les turbines à gaz (6) comportent des conduites de gaz d'échappement (8) de grand diamètre et de faible courbure qui débouchent dans des chambres de mélange d'eau et de gaz d'échappement en arrière des pompes à jet d'eau des entraînements à jets d'eau (13).

6. Bâtiment de surface militaire rapide selon la revendication 5,
**caractérisé en ce que** les chambres de mélange sont conformées de telle sorte qu'il règne une dépression à l'intérieur de celles-ci.

7. Bâtiment de surface militaire rapide selon la revendication 5 ou 6,
**caractérisé en ce que** les chambres de mélange sont conformées de telle sorte que des bulles de gaz d'échappement sont générées et sont emportées avec le jet d'eau.

8. Bâtiment de surface militaire rapide selon la revendication 5, 6 ou 7,
**caractérisé en ce que** la direction des jets d'eau s'écarte verticalement de la direction longitudinale du navire et s'étend en particulier de façon inclinée sous les hélices de gouvernail (11).

9. Bâtiment de surface militaire rapide selon la revendication 5, 6, 7 ou 8,
**caractérisé en ce que** les entraînements à jets d'eau (13) sont disposés dans des boîtiers (5) à distance du fond du navire.

10. Bâtiment de surface militaire rapide selon l'une des revendications précédentes, **caractérisée en ce que** le cercle de révolution des hélices de gouvernail (11) se trouve à l'intérieur de la section transversale de coque, le boîtier (5) des entraînements à jets d'eau (13) déterminant la section transversale de coque la plus grande.

11. Bâtiment de surface militaire rapide selon l'une des revendications précédentes, **caractérisé en ce que** les hélices de gouvernait (11) se trouvent à la distance la plus petite possible l'une de l'autre, par exemple une distance correspondant à 1,2 fois le diamètre de l'hélice et **en ce qu'**une pale d'hélice auxiliaire est de préférence disposée en avant ou en arrière des hélices de gouvernail (11), laquelle pale peut être insérée en particulier en cas de sortie rectiligne.

12. Bâtiment de surface militaire rapide selon l'une des revendications précédentes, **caractérisé en ce que** les hélices de gouvernail électriques (11) comportent chacune une hélice tractive.

13. Bâtiment de surface militaire rapide selon l'une des revendications 1 à 11, **caractérisé en ce que** les hélices de gouvernail électriques (11) comporte des hélices synchrones (12) à chaque extrémité du moteur électrique.

14. Bâtiment de surface militaire rapide selon l'une des revendications précédentes, **caractérisé en ce que** le tirant d'eau du navire n'est pas supérieur à 8 m.

15. Bâtiment de surface militaire rapide selon la revendication 3,
**caractérisé en ce que** les unités de générateurs à turbine à gaz pour les entraînements à jets d'eau (13) sont disposées à peu près au milieu du navire ou immédiatement en arrière du milieu du navire.

16. Bâtiment de surface militaire rapide selon l'une des revendications précédentes, **caractérisé en ce que** les unités rotatives de génération d'énergie et les moteurs électriques des hélices de gouvernail (11) et des pompes à jets d'eau sont montés en étant amortis contre les chocs.

17. Bâtiment de surface militaire rapide selon l'une des revendications précédentes, **caractérisé en ce que** tous les moteurs d'entraînement et toutes les unités de génération d'énergie existent au moins en double.

18. Bâtiment de surface militaire rapide selon l'une des revendications précédentes, **caractérisé en ce qu'**il comporte un réseau à courant continu doté de limiteurs de courant qui peuvent s'opposer à la génération d'arcs électrique causés par des processus physiques, en particulier des limiteur de courant supraconducteur à haute température.

19. Bâtiment de surface militaire rapide selon l'une des revendications précédentes, **caractérisé en ce que** les hélices de gouvernail (11) comportent des hélices à pas variables dont le nombre de tours et le pas peuvent être adaptés à la vitesse du navire.

20. Bâtiment de surface militaire rapide selon l'une des revendications précédentes, **caractérisé en ce que** dans les derniers 25 à 30% de la longueur du navire, le profil de carène est surélevé.

21. Bâtiment de surface militaire rapide selon l'une des revendications précédentes, **caractérisé en ce qu'**il comporte en avant des hélices de gouvernail (11) une nervure médiane qui se termine à peu près une longueur d'hélice de gouvernail avant les hélices de gouvernail (11).

22. Bâtiment de surface militaire rapide selon l'une des revendications précédentes, **caractérisé en ce que**, lorsque les unités d'entraînement à jets d'eau (13) sont en fonctionnement, il est prévu une rotation sans puissance des hélices de gouvernail électriques (11).

23. Bâtiment de surface militaire rapide selon l'une des revendications 1 à 21, **caractérisé en ce que**, lorsque les exigences de marche sont maximales, les hélices de gouvernail électriques (11) et les entraînements à jets d'eau (13) fonctionnent à puissance maximale, le nombre de tours et le pas des hélices (12) des hélices de gouvernail électriques (11) étant adaptés à cet état de fonctionnement.

24. Bâtiment de surface militaire rapide selon l'une des revendications précédentes, **caractérisé en ce que** les hélices de gouvernail électriques (11), qui sont de préférence conformées en entraînements à courant alternatif, fonctionnent dans la zone d'affaiblissement de champ lorsque le nombre de tours n₁ est dépassé.
